# EUROPEAN PATENT APPLICATION

(11) **EP 3 647 829 A1**
(43) Date of publication of application: **06.05.2020**
(21) Application number: 18203647.5
(22) Date of filing: 31.10.2018
(51) Int. Cl.: G01V 8/10, G01S 17/02, G06T 7/70

(54) **IMAGE PROCESSING FOR AN UNMANNED MARINE SURFACE VESSEL**

(71) Applicant: Xocean Limited, A91 PK18 Co. Louth (IE)
(72) Inventor: IVES, James, Co. Louth A91 PK18 (IE); CARLISLE, Andrew, Belfast, Antrim BT8 7YT (GB)
(74) Representative: FRKelly

(57) **Abstract**

A method of processing an image taken by an unmanned marine surface vessel is described, comprising capturing an image using at least one camera mounted on the vessel, identifying a horizon line in the captured image using a processing system on the vessel, and cropping a portion of the captured image above and below the identified horizon line, using the processing system, to produce a cropped image having a reduced size with respect to the captured image.

## Description

### Field of the invention

This invention relates to processing of images captured by an unmanned marine surface vessel, and in particular a marine surface vessel configured for so called "over the horizon" deployment for the purposes of collecting and transmitting data, for example via a satellite link or the like.

### Background of the invention

Ocean Data is required by multiple industries, examples including:
▪ Industrial: Oil & Gas, Seabed Mining, Interconnectors
▪ Fisheries: Stock Management, Aquaculture, Protection
▪ Offshore Renewables: Offshore Wind, Tidal Energy, Wave Energy.
▪ Transport: Shipping, Ports & Harbours.
▪ Safety & Security: Maritime Safety, Border Surveillance.

The type of data that is collected varies from industry to industry, and the type of sensors and other equipment utilised in said data collection can therefore also vary significantly. The following lists the type of sensors and other equipment based on the particular survey to be undertaken:
Oceanography, Hydrography & Meteorological Surveys
   ▪ ADCP Acoustic Doppler Current Profiler
   ▪ CTD Conductivity, Temperature & Depth Profiler
   ▪ Magnetometer (detection of seabed metallic objects)
   ▪ Side Scan / Sub Bottom Profiler (seabed properties)
   ▪ Single / Multibeam Echo Sounder (seabed mapping)
   ▪ Weather Station (wind speed, direction, temperature, pressure etc)
Environmental Surveys
   ▪ Acoustic Fish Count (fisheries management)
   ▪ Chemical / Biological Sensors (measurement of oxygen, chlorophyll etc.)
   ▪ PAM Passive Acoustic Monitoring (monitoring of marine mammals and noise)
Subsea Communications
   ▪ Acoustic Modem (communication with subsea systems)
   ▪ Ultra-Short Baseline Positioning (underwater acoustic positioning)
Vessel Surveillance
   ▪ AIS Automatic Identification System (vessel identification)
   ▪ Hydrophone (vessel detection)
   ▪ Thermal Camera

Collection of ocean data is traditionally performed using a conventional vessel fitted with an array of the above sensors, which vessel is then manned by a crew. This traditional approach is slow, expensive and carries significant health & safety risks.

An unmanned vessel can be used in place of a manned vessel. This leads to improved cost and safety. Cost is reduced by significantly reducing the crewing requirement per hour of vessel operation coupled with use of a smaller, lighter, and more fuel efficient vessel. Safety is improved by removing personnel from the dangerous marine environment, and use of a smaller, lighter vessel reduces the potential for the vessel to cause damage to other marine users.

To fully realise the potential benefits of unmanned vessel operation, it is necessary to be able to operate the vessel truly remotely, i.e. without a manned support or guard vessel nearby and with the vessel long distances from shore - terms include 'over-the-horizon' and 'beyond line of sight'. The current and foreseeable regulatory environment requires that unmanned vessels are monitored and directed in real-time by trained operators, and so a reliable communication system between the vessel and the shore operators is required, and this communication system must be capable of providing the operators with sufficient 'situational awareness' to safely navigate and operate the vessel. This in turn requires a communication system capable of transmitting data to and from the vessel.

The only viable form of data communication between a vessel operating far offshore and an onshore operator is using satellite internet services. There are currently a number of satellite services which provide internet connectivity to marine users, in a manner similar to a terrestrial mobile network i.e. users have some form of an antenna, modem and sim card coupled with a usage contract allowing transmission of set allowances of data at a variety of speeds. Compared to modern mobile phone contracts, marine satellite internet services have much lower bandwidths (i.e. lower speeds) and are orders of magnitude more expensive per unit of data. Additionally, due to the distances involved in transmitting messages to satellites and back to ground stations, satellite data services suffer from very high latency (time taken between transmission and receipt of a message).

The combination of low bandwidths and extremely high costs along with the need to transmit sufficient information for an operator to safely navigate and operate the vessel is an issue. It is therefore an object of the present invention to overcome one or more of the above mentioned issues.

### Summary of the invention

According to the present invention there is provided a method of processing an image taken by an unmanned or autonomous marine surface vessel comprising capturing an image using a camera mounted on the vessel, identifying a horizon line in the captured image using a processing system on the vessel, and
cropping a portion of the captured image above and below the identified horizon line, using the processing system, to produce a cropped image having a reduced size with respect to the captured image.

This method is advantageous in that it reduces the data requirements of captured images so that they can be transmitted on shore in a more efficient manner. That is, only the essential information is transmitted and the available bandwidth can be efficiently used.

Preferably, the method further comprises transmitting the cropped image to an onshore operator system via a satellite link. The onshore operator can then take any action deemed appropriate given they have the required information.

Preferably, the method further comprises processing the cropped image, using the processing system on the vessel, to identify any water borne objects thereon. In order to safely pilot the vessel any objects in the water need to be identified.

Preferably, the method further comprises transmitting the image to an onshore operator system only if a target is identified therein. This reduces the data requirements of a satellite link between the vessel and the onshore operator system - the operator is only provided with the essential information. That is, if a vessel is on course and no targets in its path are identified, there is no need to provide an operator with an image of sea.

Preferably, the image transmitted to the onshore operating system includes a flag to identify the image as having a target therein. This reduces the risk of the operator not noticing that a target has been identified by the vessel.

Preferably, the method further comprises processing the cropped image when a target is identified therein to determine at least one of position, bearing and size in the image of the target. In order to safely pilot the vessel this additional information with respect to objects in the water is useful. Preferably, the method further comprises capturing a plurality of images using the camera over a period of time and processing the images when a target is identified to determine at least one of position, bearing and size in the image of the target. Determining the position of targets over time is useful in determining tracking a target as it moves and/or the vessel moves.

Preferably, the method further comprises processing the plurality of images, determining that the same target is identified therein and determining at least one of position, bearing and size of the target in each image to asses if the target is a collision risk to the vessel. The automatic tracking of targets over time relieves an operator of the burden of this task.

Preferably, the method further comprises determining from the plurality of image that the position of the same target relative to the vessel has changed over the period of time and therefore the same target is not a collision risk.

Preferably, the method further comprises determining from the plurality of images that the position of the same target relative to the vessel has not changed over a period of time and therefore the same target is a collision risk. Once this determination is made, evasive action can be taken by a remote operator or automatically by the vessel.

Preferably, the method further comprises the vessel automatically taking evasive action in response to determining that the same target is a collision risk.

Preferably, the method further comprises cross referencing at least one of position, bearing and size of a target identified in the image with at least one of position and bearing targets identified on an automatic identification system. In this manner, the targets identified in the captured images can be supplemented with data from the automatic identification system. In addition, targets identified in the captured images may not be known to the automatic identification system. The use of two systems provides a redundancy.

Preferably, the method further comprises displaying the cross-referenced information on a map using a graphical user interface. This provides an easy to interpret representation for an operator.

There is also provided a computer-readable medium comprising non-transitory instructions which, when executed, cause a processor to carry out a method outlined above.

There is further provided a system for processing an image taken by an unmanned marine surface vessel; the system comprising a camera for capturing an image on the vessel, a processing system on the vessel configured to identify a horizon line in the captured image and crop a portion of the captured image above and below the identified horizon line to produce a cropped image having a reduced size with respect to the captured image.

### Brief description of the drawings

The present invention will now be described with reference to the accompanying drawings, in which:

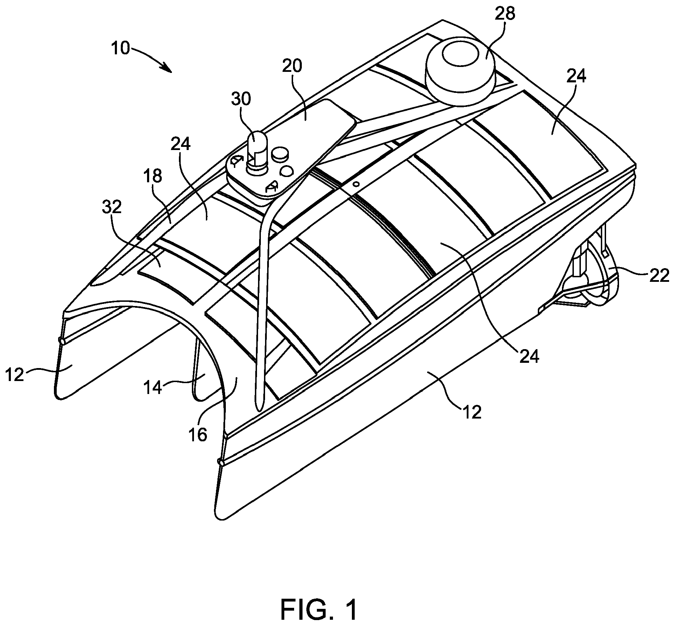

Figure 1 illustrates a perspective view of an unmanned marine surface vessel according to a preferred embodiment of the present invention;

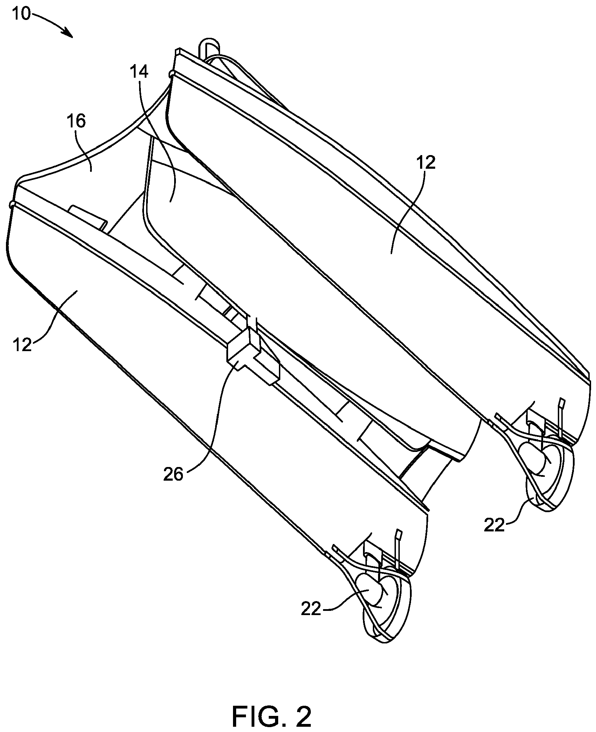

Figure 2 illustrates a perspective view from beneath of the vessel shown in Fig. 1;
Figure 3 illustrates an example of an image captured by a camera of the vessel shown in Fig. 1;
Figure 4 illustrates the image of Fig. 3 having a line drawn thereon representing the horizon;
Figure 5 illustrates the image of Fig. 4 having the line drawn thereon made horizontal;
Figure 6 illustrates the image of Fig. 5 cropped to delete a proportion thereof;
Figure 7 illustrates another example of an image captured by a camera of the vessel shown in Fig. 1;
Figure 8 illustrates a number of images showing transformations used in a horizon recognition technique;
Figure 9 illustrates an image showing a transformation wherein the horizon has been identified and a line drawn thereon;
Figure 10 illustrates the image of Fig. 6 with a water borne target identified therein;
Figure 11 illustrates the image of Fig. 10 with the bearing of the identified target shown, this information is also shown in an accompanying diagram;
Figure 12 illustrates a sequence of sequence of diagrams in which a target is not on a collision course with the vessel of Fig. 1;
Figure 13 illustrates a sequence of sequence of diagrams in which the target is on a collision course with vessel of Fig. 1; and
Figure 14 illustrates a graphical user interface displaying data from an automatic identification system.

### Detailed description of the drawings

Referring now to the accompanying drawings there is illustrated an unmanned marine surface vessel, generally indicated as (10), for use in collecting various ocean and/or environmental or other data, and is particularly designed for use in so called "over the horizon" deployments, facilitating significantly greater periods of time at sea, at significantly reduced costs and risk than a conventional manned vessel, thereby allowing substantially larger areas of ocean to be traversed and thus larger volumes of data to be collected and analysed.

As the vessel (10) is designed as an unmanned (and potentially fully autonomous vehicle), there is no requirement for crew space, deck space, a wheel house, storage for food, safety equipment such as life jackets, etc. and as a result the vessel (10) is significantly reduced in size relative to a conventional vessel, in particular having a significantly reduced height and thereby dramatically lowering the centre of gravity in order to achieve improved stability when floating on the water. As a result of the reduced size and weight of the vessel (10) it is possible to operate the vessel (10) with a much smaller motor and fuel load that is required for conventional manned vessels.

The vessel (10) comprises an identical pair of outer hulls (12) spaced from one another and which, in use, are simultaneously located in the water in order to provide the primary buoyancy to the vessel (10). The vessel (10) additionally comprises a centre hull (14) disposed between and in parallel to the outer hulls (12). In the preferred embodiment illustrated the hulls (12, 14) are moulded as a monocoque form from fibreglass or the like, although it will be appreciated that any other suitable materials and/or methods of manufacture may be employed. The hulls (12, 14) are joined by an overarching deck (16) which again may be formed from any suitable material, and in the preferred embodiment is moulded from fibre glass and bonded to the outer hulls (12) and the centre hull (14). Both the outer hulls (12) and the centre hull (14) are hollow and adapted to carry both fixed equipment such as a power supply (not shown) and related fuel source (not shown) for the vessel (10), in addition to variable pay load depending on the operation being undertaken by the vessel (10).

The vessel (10) further comprises an upstanding gantry type frame (18) which is located above and over the deck (16), and in the preferred embodiment illustrated carries a platform (20) on which one or more sensors and/or transmitters or receivers or other such equipment may be mounted. The frame (18) may be detachably mounted to the deck (16) or any other suitable location, and in the embodiment illustrated is formed from tubular steel or the like, although again any other suitable alternative material may be employed.

Located towards the rear of each of the outer hulls (12) is drive means in the form of a thruster (22) which are each fixed in position, that is to say they are not rotatable in order to effect steering of the vessel (10) as is normally the case, but rather steering is effected by differential thrust between the pair of thrusters (22). In the preferred embodiment illustrated each of the thrusters (22) is in the form of a nacelle including an enclosed or ducted propeller blade (not shown), although it will appreciated that any other functional alternative may be employed, for example a water jet type thruster.

The pair of thrusters (22) are electrically powered from a battery (not shown) located, in the preferred embodiment illustrated, in the centre hull (14) as hereinafter described. The battery (not shown) is preferably charged by a diesel generator (not shown) which is again preferably located in the centre hull (14), supplied with fuel from a liquid fuel tank (not shown), again also preferably located in the centre hull (14). The generator (not shown) is one of the largest and heaviest components on the vessel (10) and positioning said component in the centre hull (14) allows the outer hulls (12) to retain a narrow and deep profile in order to render them hydrodynamically efficient, improving the energy efficiency of the vessel (10), while also providing significantly improved stability in rough waters as deep and narrow hulls tend to cut through the waves rather than being overly buoyant and then being lifted over waves. In addition, locating the fuel tank (not shown) and the generator (not shown) adjacent to one another within the centre hull (14) simplifies the fuel feed from the tank to the generator. Similarly locating the large and heavy battery (not shown) in the centre hull (14) further allows for the above deep and narrow profile of the outer hulls (12), in addition to solving the trim problem that would otherwise occur if the generator (not shown) were placed in the centre hull (14) and the battery and/or fuel tank (not shown) were placed in one of the outer hulls (12).

In order to supplement the generator (not shown) the vessel (10) is also preferably provided with an array of solar panels (24) which may be positioned at any suitable location, and in the preferred embodiment illustrated cover much of the upper surface of the deck (16), although it will be understood that the number and configuration of the solar panels (24) may be altered as required. The hardware required to convert the electrical energy generated by the solar panels (24) to the correct current and/or voltage to charge the battery (not shown) may be located in the centre hull (14) and/or in one or other of the outer hulls (12). The provision of the solar panels (24) reduces the fuel consumption of the generator in producing electrical power for the thrusters (22), again increasing the range and/or ocean going time of the vessel (10).

One of the primary sensors provided on the vessel 10 is a sonar or ultrasonic sensor (26) which in the preferred embodiment illustrated is provided on the end of a pole which extends downwardly from the keel of the centre hull (14), and preferably at or adjacent the centre of mass of the vessel (10) in order to reduce the amount of movement experienced by the ultrasonic sensor (26) in undulating waters, and therefore potentially improving the operational ability in poor weather conditions. It will also be so understood that additional or alternative marine instruments (not shown) may be mounted in place of or in addition to the ultrasonic sensor (26).

The vessel (10) additionally comprises a satellite receiver (28) mounted above the deck (16) in a conventional protective housing and operable effect two way communicate with the iridium constellation of low orbit satellites in order to allow extremely accurate positioning and navigation of the vessel (10), while also allowing route information to be transmitted to and from the vessel (10). GPS positioning allows for accurate routing to be followed by the vessel (10), enables an operator to establish an exact position of the vessel (10) at any given time, and to establish whether or not the vessel (10) is moving or stationary. An existing route being navigated by the vessel (10) can be modified in real time and new routes sent to the vessel (10) to be applied immediately or when the current route has been completed.

For collision avoidance the vessel (10) may be provided with a camera (30) for capturing images. A thermal imaging camera could also be used which would allow for night vision, the vessel (10) also being provided with an image processing system e.g., image processing and recognition software running on suitable hardware (not shown) such as a programmable logic controller or computer contained within one of the hulls (12, 14), to analyse image files to detect possible collision risks. As outlined hereinafter in more detail, if a collision risk exists, a pre-determined set of actions (stop, turn to port/starboard etc.) are taken depending on the position, speed and course of the collision risk. A conventional automatic identification system (AIS) and a short range radar, for example having a range of fifty metres or less, are also preferably installed to improve collision avoidance. Each of these systems will again be controlled, possibly autonomously, via suitable control software and hardware contained on the vessel (10). A conventional beacon is also preferably provided on the platform (20) in order to provide visibility of the vessel (10) to other marine craft.

In marine navigation a key component of situational awareness is keeping a visual lookout. On an unmanned vessel this can be achieved using a camera system, either a single camera with the ability to rotate through 360 degrees, or a combination of cameras arranged to achieve 360 degree visual coverage around the vessel. A single fixed camera covers a 90 degree horizontal field of view, and so four cameras can be used to provide full 360 degree coverage around the vessel (10).

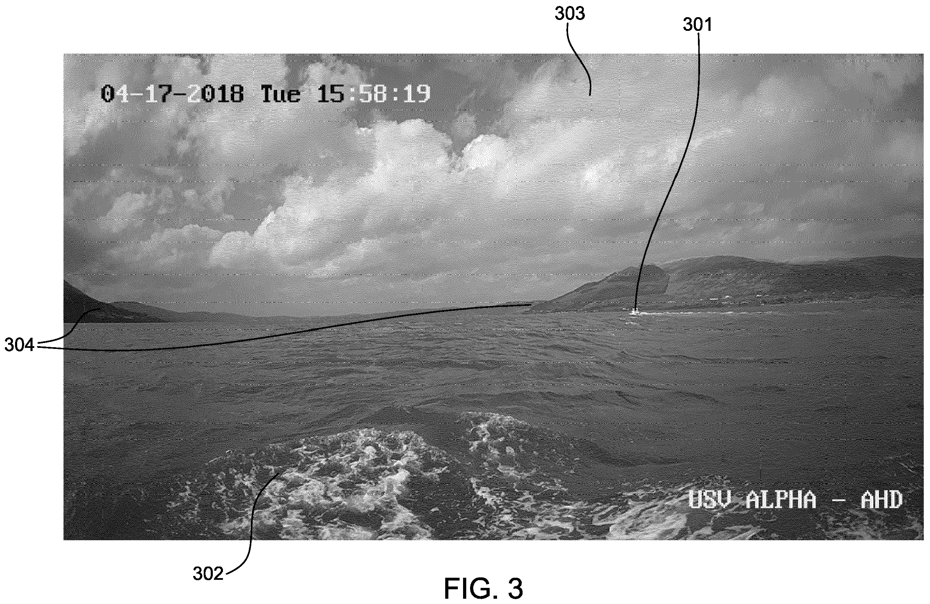

Turning then to the operation of the vessel (10), and referring to figure 3, an example of a marine image (300) captured by camera (30) is provided. This captured image is used to keep a visual lookout as will be explained in more detail hereinafter. In the captured image (300) a vessel (301) on the water (302) is shown. The sky (303) is also shown along with land based geographical features (304).

The captured image (300) is a high quality image. However, as is known in the art, such images can have significant file sizes. Transmitting the required number of such raw images (300) from the vessel (10) to shore via a satellite based connection at a rate suitable for navigation and collision avoidance is impractical.

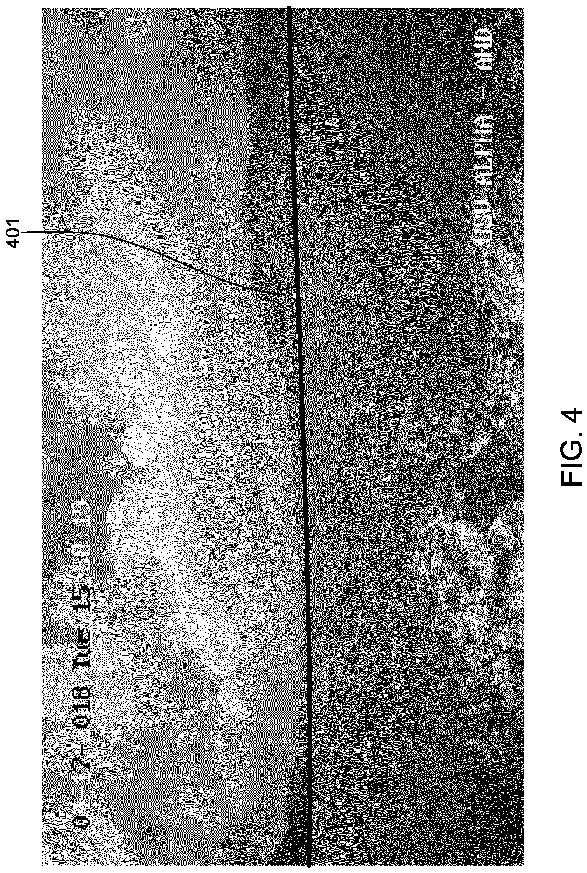

Accordingly, a method is employed to process the captured images. At least some of the steps of this method may be performed by the image processing system on board the vessel (10). After capture of the image, the next step of this method involves the image processing system identifying the horizon in the captured image (300). Figure 4 shows an exaggerated line (401) drawn on the example image (300), which represents the identified horizon.

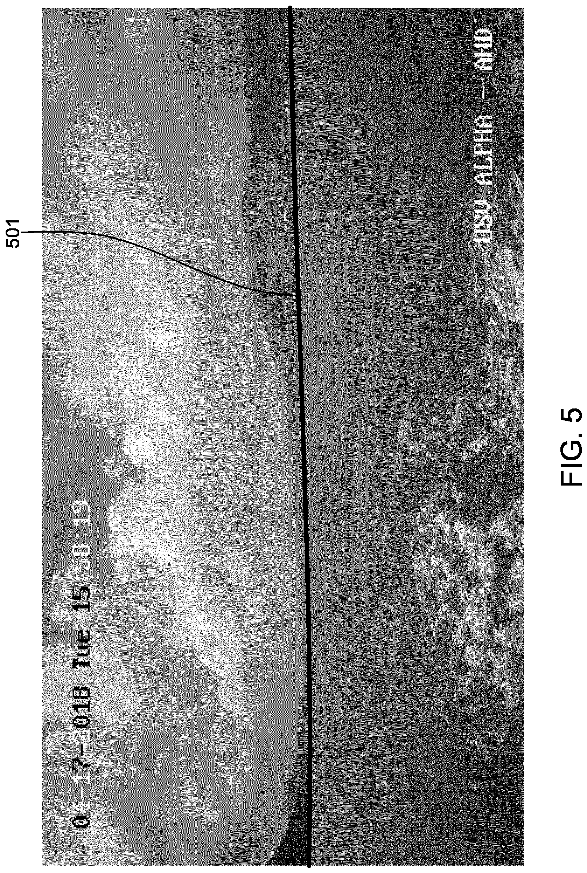

The next step of the method involves rotation of the image (300) to straighten the detected horizon line (401). That is the image (300) is adjusted or rotated such that the line (401) is horizontal or parallel to the top/bottom of the image (300). The adjusted image with the horizon line (501) can be seen in figure 5.

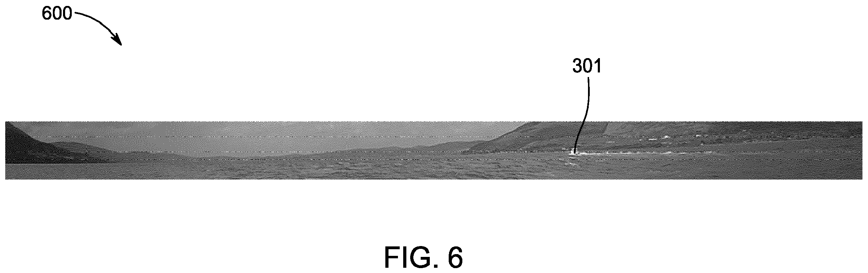

The next step of the method for processing captured images involves the image (300) being cropped to a pre-defined distance above and below the horizon line (501). That is, a portion of the image above and below the horizon line is cut away from the image (300) to produce a cropped image (600) shown in figure 6. As is know in the art, cropping is the removal of unwanted outer areas from a photographic or illustrated image. The process involves of the removal of some of the peripheral areas of an image to remove an extraneous area from the picture.

In the example image (600) the majority (85%) of the image is cropped. That is, most of the sky (303) and a large portion of the sea (302) in the 'nearfield' is not necessary in the context of the present teachings. Furthermore, as will be explained in more detail below, maintenance of the complete image (300) may be a hindrance to correct processing of the captured image.

The person skilled in the art will appreciate that the example of 85% is merely exemplary. Dependent on operation requirements, the image could be cropped by any amount e.g., 35%, 45%, 55%, 65% 75% etc.

An optional step of the image processing method involves the image (600) being compressed using image compression algorithms to further reduce its size while preserving information. Any suitable image processing algorithm may be chosen as appropriate by the person skilled in the art.

In the illustrated example, the processed image (600) is approximately 10kB in size, compared to 300kB for the original image (300) i.e. the file size has been reduced by a factor of 30, while preserving the information critical for navigation of the vessel (10). In particular, the vessel (301) is maintained in the image (600). As will be explained in more detail hereinafter, this is important for collision avoidance.

It will be appreciated that the data sizes given for the processed image are merely exemplary and are dependent on a number of factors. However, it is clear that cropping a portion of the capture image results in an image that requires less data to represent. Accordingly, such a processed image can be transmitted by the vessel (10) using considerably less data.

The aforementioned detection of the horizon (i.e., generation of horizon line 401) can be performed using a variety of machine vision techniques, including but not limited to machine learning and neural processing.

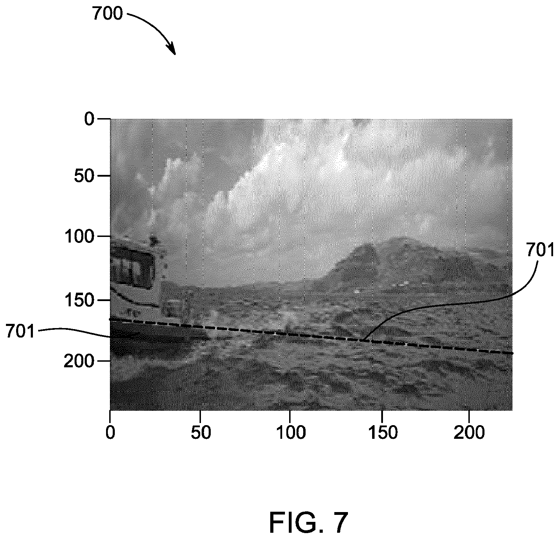

In one example, machine vision techniques based on contours are used. The image processing system in accordance with the present teachings looks for the longest 'line' in the image, and then the assumption is made that this line is the horizon. This implementation has the advantage that it is computationally inexpensive. The disadvantage is that this technique can suffer from reduced accuracy in confusing situations. For example, in the image (700) shown in figure 7, this horizon identification technique has incorrectly identified a contour line (701) as the horizon. That is, a contour line (701) has been formed by the side of a nearby vessel (702) and a chance arrangement of wavelets, which the image processing system has incorrectly identified as the horizon. This technique is also vulnerable in situations where the horizon is indistinct (e.g. fog) or other strong lines exist in an image e.g. vessel wakes, hilltops etc.

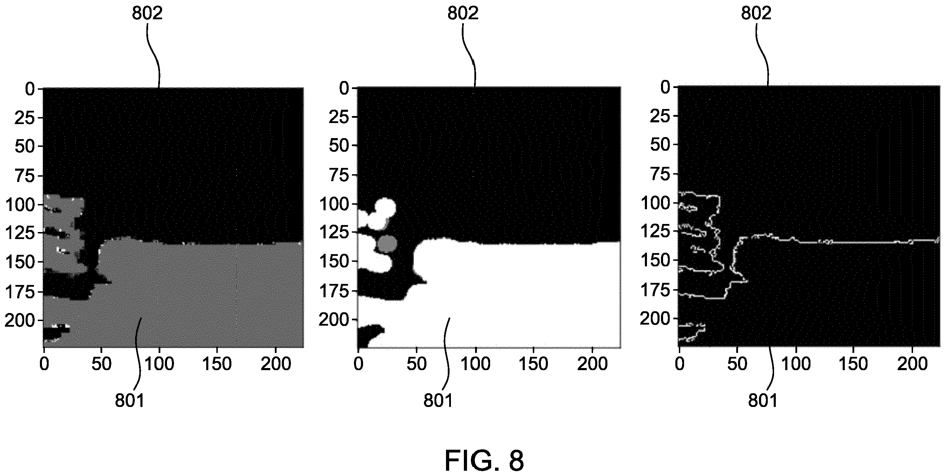

An alternative technique for horizon detection uses machine learning techniques to 'train' the image processing system to interpret images as a human would. For example, a set of labelled training images can be used in which the system is taught to identify water. An unknown image is then processed through a series of transformations (shown in figure 8) which separate the 'water' (801) from the 'not water' (802) in an image. Line detection can then be performed on this simplified image leading for more robust horizon detection (and one which can be improved through time as more training images are created). The transformations of figure 8 show the results of this horizon detection technique applied to the same image (700) as that of figure 7.

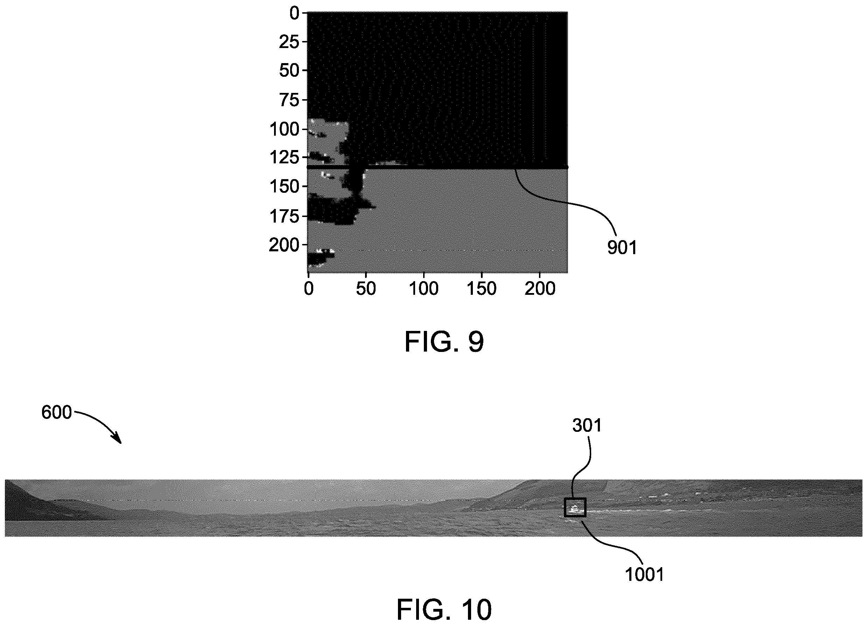

The final step of this technique results in the horizon line (901) being correctly identified and not affected by the vessel, land or waves (figure 9). Having correctly identified the horizon line (901), the original image (700) can now be rotated and cropped as outlined above.

It will be appreciated that although two techniques have been outlined above for identifying a horizon line in a captured image on board an unmanned marine surface vessel, any suitable technique for horizon identification can be used by the person skilled in the art. The specific technique used is not critical to the present teachings; rather the cropping of the image to reduce to data requirements is the focus.

After processing of captured images as outlined above, the processed (cropped) images can be transmitted from the vessel (10) to an onshore operator using satellite internet services. The images can be further processed on shore. It should be noted that without using the above described image processing method, it is not possible to send the required volume of image data for safe operation of the marine vessel (10) through a satellite connection to an onshore operator.

The next step in the method of processing the captured image may involve performing target detection on said image. That is, the cropped image may be further processed by the image processing system for target detection. That is, the image is analysed for objects on the water that may pose a collision risk.

Turning to figure 10, the image processing system has detected the previously mentioned waterborne vessel (301) in the image and drawn a box (1001) around it. Any number of target detection techniques known to the person skilled in the art may be used for target detection in the cropped image (600) e.g., blob detection. As is known in computer vision, blob detection methods are aimed at detecting regions in a digital image that differ in properties, such as brightness or colour, compared to surrounding regions. A corner detection technique may also be used.

An advantage of performing target detection on the cropped image (600) instead of the uncropped image (300) is that it results in improved target detection results. For example, if a target detection technique is applied to an uncropped image; false targets such as the sun may be classified as a target. The image processing system is only concerned with objects on the water that may pose a risk to the vessel (10).

Each image may be processed and then categorised by the image processing system as either having a target detected or not. The categorised images can be used in a number of ways. For example, the next step of the image processing method may involve sending an alarm signal to the onshore operator highlighting the detected target. For example, the image (600) could be transmitted to the onshore operating system and labelled as identifying a potential collision risk. An alarm can be raised in the control system to alert the operator and draw their attention to the detected target. This helps to reduce operator errors.

The method for processing captured image may include implementing an image transmission filter. That is, where images with no target detected are simply not transmitted back to the onshore operating system. This can significantly reduce the satellite data allowance required, and therefore reduce costs.

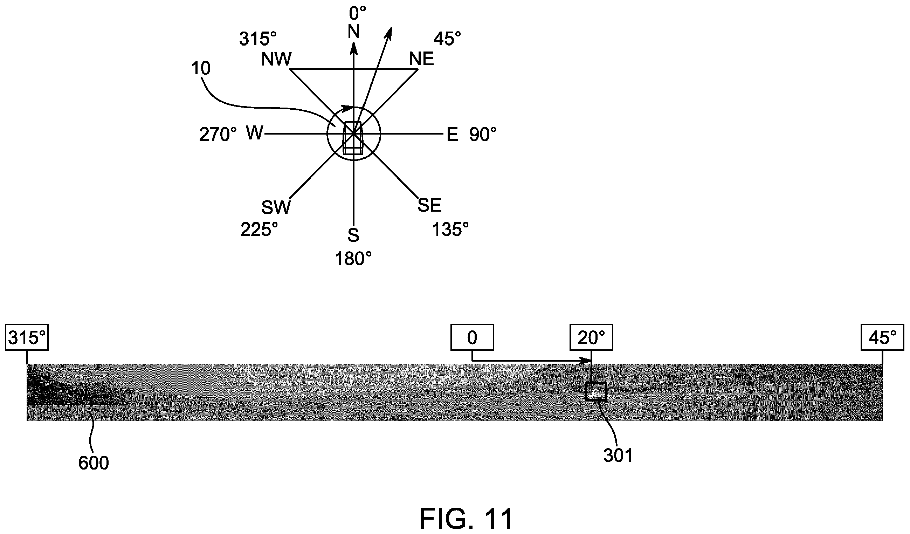

The method for processing captured images may also include the image processing system recording a detected target's position and size in the cropped image (600). The system may also track which direction the vessel (10) (and therefore camera (30)) was pointing when the image was taken. This information can then be used to track detected targets, estimate their position relative to the vessel, and monitor for collision risk. An example of how this is achieved is described with reference to figure 11.

In this example, the vessel (10) having the camera (30) mounted thereon was pointing north (N) when the forward facing image (600) was taken. Therefore, the field of view of the forward facing camera (30) extends from bearing 315° at the leftmost edge of the image (600) to 45° at the rightmost edge of the captured image (600). Based on the position of the target vessel (301) in the image (600), the target is at a bearing of 20° from the vessel (10).

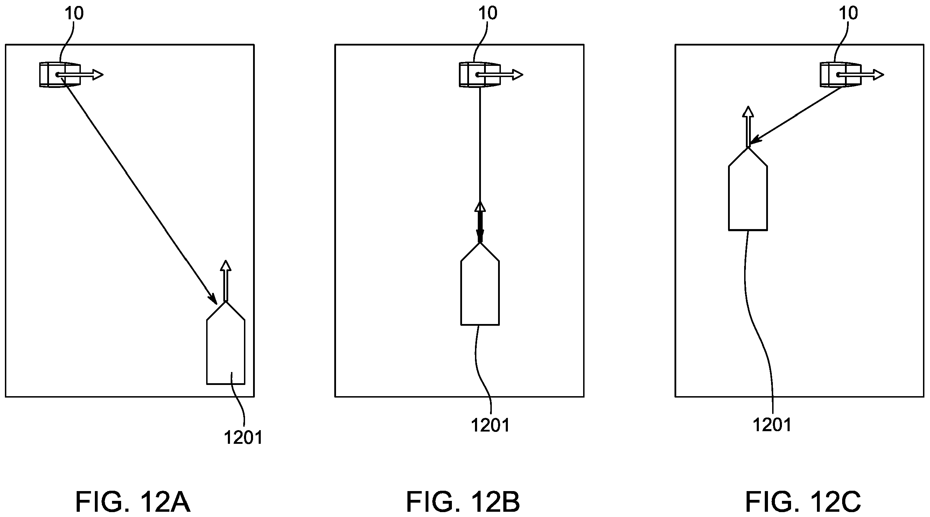

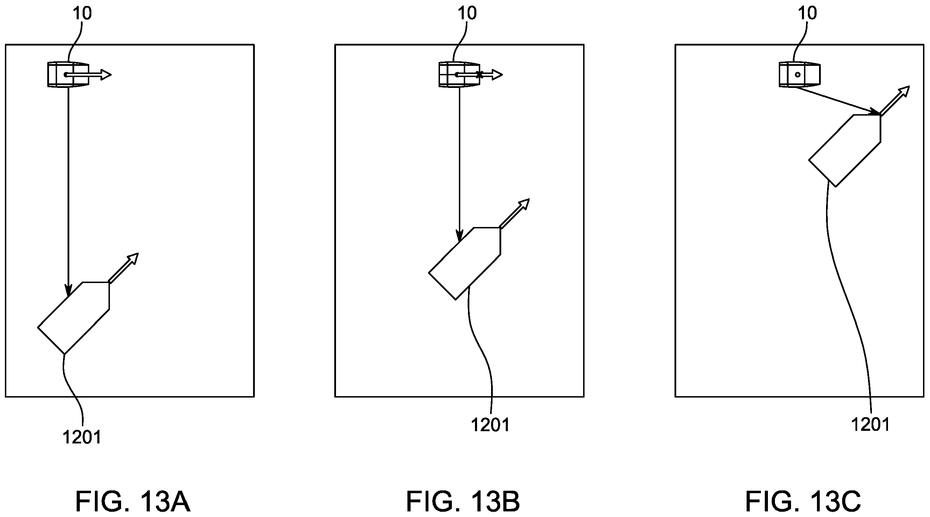

The determination with respect to whether a target (301) presents a collision risk cannot be determined from a single image. However, by tracking targets through multiple images the system can assess if a collision risk exists. This is illustrated in the sequences of figures 12 and 13. If the bearing to the target does not change then a collision risk exists and suitable action can be taken either by an on shore operator or automatically by a control system of the vessel (10).

It will be appreciated that as well as tracking the bearing of the target, the size of the target in the image can give additional information e.g. if the target size is increasing it could be getting closer, or turning and exposing a different profile etc.

With reference to figure 12, this shows a sequence of diagrams in which a target (1201) is not on a collision course with the unmanned marine vessel (10) of the present teachings. In the first diagram (a), the image processing system of the vessel (10) detects the target (1201) off the starboard bow of the vessel (10). Based on a single captured image, the target may be classified as a collision risk - it is within the field of vision of the forward facing camera of the vessel (10).

In the second diagram (b), the image processing system has detected the target (301) is now directly off the starboard side of the vessel (10). This detection may involve using an image captured with starboard facing camera. From the second captured image (starboard direction), the image processing system determines that the position of the target (1201) relative to the vessel (10) has changed. Therefore the system concludes that there is no collision risk. An alarm does not have to be raised and/or evasive action taken.

In the third diagram (C), the target (301) is shown passing safely to stern. Therefore, while the target was monitored for a possible collision, action did not have to be taken. The system could be configured to take evasive action if it was determined that the target and the vessel would pass each other too closely (within a predefined limit) e.g., 200m but any distance could be chosen.

With reference to figure 13, this shows a sequence of diagrams in which a target (1201) is on a collision course with the unmanned marine vessel (10) of the present teachings. In the first diagram (a), the image processing system of the vessel (10) detects the target (1201) directly off the starboard side of the vessel (10). Based on a single captured image, the target may be classified as a collision risk - it is within the field of vision of the forward facing camera of the vessel (10).

It will be appreciated by the person skilled in the art that a collision risk can exist from any angle - the action taken depends on how the target approaches. Any target identified in any camera of the vessel is classified as a collision risk until assessed otherwise.

In the second diagram (b), the image processing system has detected the target (301) is still directly off the starboard side of the vessel (10). From the second captured image (starboard direction), the image processing system determines that the position of the target (1201) relative to the vessel (10) has not changed. Therefore the system concludes that there is still a collision risk. The image processing system determines that an alarm must be raised and/or evasive action taken.

It will be appreciated by the person skilled in the art that any number of actions could be taken to avoid a collision. This could involve sending an image or images to the on shore operating system flagging the potential collision. An on shore operator could then instruct the vessel to take action. However, the method of the presenting teachings may further comprise the processing system of the vessel automatically taking action in response to determining that a collision with an identified target is possible. For example, with reference to (c) of figure 13, the vessel (10) comes to a stop. The target (1201) passes ahead of the stopped vessel (10). Once the target (10) has passed, the vessel (10) can continue on its previous course. It will be appreciated that the actions to be taken are defined by the 'International Regulations for Preventing Collisions at Sea' (COLREGs). In the example of figure 13, the target vessel (1201) is to the starboard side, and the vessel (10) is therefore the 'give way' vessel and required to take action, while the target vessel (1201) is the 'stand-on' vessel and is required to hold course in accordance with the COLREGs).

Further steps of the method for processing an image captured by an unmanned marine surface vessel may include cross referencing any targets identified in captured images with data from an automatic identification system (AIS).

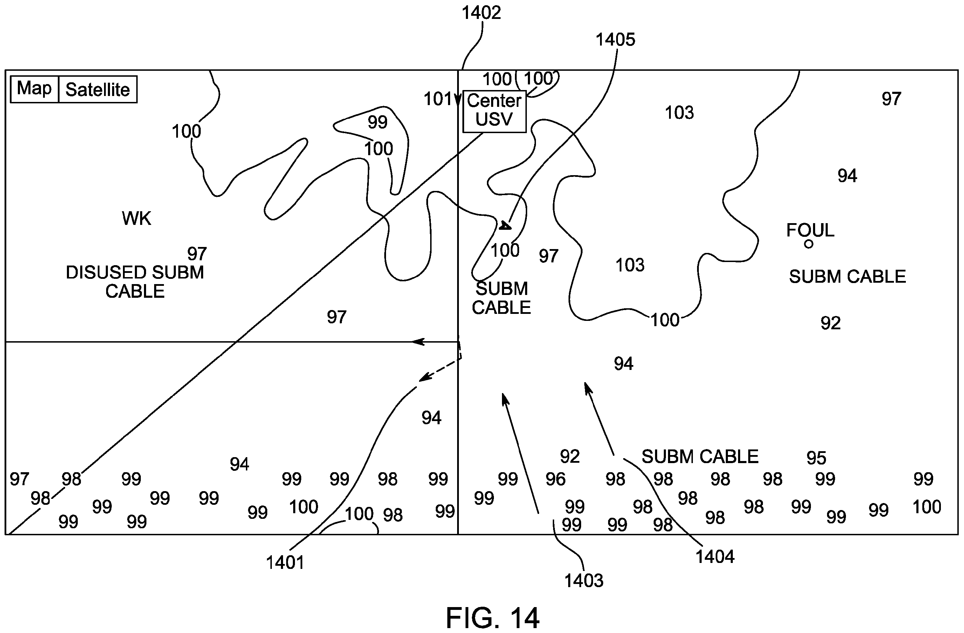

As previously mentioned, the vessel (10) is equipped with an AIS (automatic identification system) transceiver. This is a digital marine radio system which broadcasts a short message between vessels, each message containing information about the current position, speed, heading etc. The control system on board decodes these messages and relays them back to the onshore control system, where they are displayed on a graphical user interface for the operator to view. An example of a map representing the data received from the AIS system is displayed in figure 14. This could be displayed to an operator at an on shore operations centre.

The unmanned marine vessel (10) in accordance with the present teachings is shown by arrow (1401). As is known to the person skilled in the art, the arrow also indicates the direction and speed of the vessel (10). The vessel (10) was previously on a different heading indicated by (1402) but evasive action was taken i.e., the vessel turned to starboard.

Two other moving vessels are represented by arrows (1403) and (1404) while a stationary vessel is indicated by arrow (1405). The vessel (10) may have taken evasive action in view of vessel (1403) e.g., it was determined that vessels would pass each other at less than a predetermined safe passing distance.

There are situations where a vessel or other potential target may not be broadcasting an AIS signal. This may be a result of a transponder being turned off as the vessel is involved in an illegal actively, illegal fishing, smuggling etc. However, not all instances of AIS signals dropping out are intentional. Weak signals, spotty satellite reception and interference can all cause gaps in AIS tracks. There are also situations wherein the targets are abandoned/drifting vessel or some other object in the water. There are also vessels that are not currently required to carry AIS e.g. recreational vessels, naval vessels etc.

The target data captured by the image processing system of the present teachings can be cross-referenced with targets identified on the AIS radio system. Targets that are identified and tracked on the image processing system but not seen on the AIS map can be flagged to operator for attention. The targets identified by the image processing system can also be represented on the GUI of figure 14.

In another configuration, additional information from the AIS system can be overlaid on a captured image. A hyperlink to an online vessel database can be provided to aid an operator in identifying a target vessel that has been captured in an image.

In general, the terms used in the following claims should not be construed to limit the disclosure to the specific examples disclosed in the specification, unless the above detailed description explicitly defines such terms. Accordingly, the actual scope of the disclosure encompasses not only the disclosed examples, but also all equivalent ways of practicing or implementing the disclosure under the claims.

The words comprises/comprising when used in this specification are to specify the presence of stated features, integers, steps or components but does not preclude the presence or addition of one or more other features, integers, steps, components or groups thereof.

## Claims

1. A method of processing an image taken by an unmanned marine surface vessel comprising:
capturing an image using at least one camera mounted on the vessel;
identifying a horizon line in the captured image using a processing system on the vessel; and
cropping a portion of the captured image above and below the identified horizon line, using the processing system, to produce a cropped image having a reduced size with respect to the captured image.

2. The method of claim 1 further comprising transmitting the cropped image to an onshore operator system via a satellite link.

3. The method of claim 1 further comprising processing the cropped image, using the processing system on the vessel, to identify any water borne objects thereon.

4. The method of claim 3 further comprising transmitting the image to an on shore operator system only if a target is identified therein.

5. The method of claim 4 wherein the image transmitted to the on shore operating system includes a flag to identify the image as having a target therein.

6. The method of any one of claims 3 to 5 further comprising processing the cropped image when a target is identified therein to determine at least one of position, bearing and size in the image of the target.

7. The method of any one of claims 3 to 6 further comprising capturing a plurality of images using the at least camera over a period of time and processing the images when a target is identified to determine at least one of position, bearing and size in the image of the target.

8. The method of claim 7 further comprising processing the plurality of images, determining that the same target is identified therein and determining at least one of position, bearing and size of the target in each image to asses if the target is a collision risk to the vessel.

9. The method of claim 8 further comprising determining from the plurality of image that the position of the same target relative to the vessel has changed over the period of time and therefore the same target is not a collision risk.

10. The method of claim 9 further comprising determining from the plurality of images that the position of the same target relative to the vessel has not changed over a period of time and therefore the same target is a collision risk.

11. The method of claim 10 further comprising the vessel automatically taking evasive action in response to determining that the same target is a collision risk.

12. The method of any one of claims 6 to 11 further comprising cross referencing at least one of position, bearing and size of a target identified in the image with at least one of position and bearing targets identified on an automatic identification system.

13. The method of claim 12 further comprising displaying the crossed referenced information on a map using a graphical user interface.

14. A computer-readable medium comprising non-transitory instructions which, when executed, cause a processor to carry out a method according to any one of claims 1 to 13.

15. A system for processing an image taken by an autonomous marine surface vessel; the system comprising:
at least camera for capturing an image on the vessel;
a processing system on the vessel configured to identify a horizon line in the captured image and crop a portion of the captured image above and below the identified horizon line to produce a cropped image having a reduced size with respect to the captured image.
